# EUROPÄISCHE PATENTSCHRIFT

(11) **EP 3 609 764 B1**
(45) Veröffentlichungstag und Bekanntmachung des Hinweises auf die Patenterteilung: **03.03.2021**
(21) Anmeldenummer: 18717319.0
(22) Anmeldetag: 09.04.2018
(51) Int. Cl.: B61L 23/00, B61K 9/00, B60L 3/00, B61L 15/00, B60T 13/66, B60T 17/22

(54) **UNTERSTÜTZUNG VON ZUGLEITSYSTEMEN DURCH ONLINE-ÜBERTRAGUNG VON INFORMATIONEN ZUM BREMSVERMÖGEN**
SUPPORT OF TRAIN CONTROL SYSTEMS BY ONLINE TRANSMISSION OF INFORMATION ABOUT BRAKING ABILITY
ASSISTANCE À DES SYSTÈMES D'ACHEMINEMENT DE TRAINS PAR TRANSMISSION EN LIGNE D'INFORMATIONS CONCERNANT LA PUISSANCE DE FREINAGE

(30) Priorität: 11.04.2017 DE 102017206199
(43) Veröffentlichungstag der Anmeldung: 19.02.2020
(73) Patentinhaber: KNORR-BREMSE Systeme für Schienenfahrzeuge GmbH, 80809 München (DE)
(72) Erfinder: FISCHER, Marcus, 80469 München (DE); WACH, Jörg-Johannes, 81247 München (DE); HERDEN, Marc-Oliver, 81377 München (DE); BERGER, Peter, 85716 Unterschleißheim (DE); RAU, Rainer, 82538 Geretsried (DE)
(86) Internationale Anmeldenummer: PCT/EP2018/058978
(87) Internationale Veröffentlichungsnummer: WO 2018/189078

(56) Entgegenhaltungen:
- DE-A1-102011 075 218
- DE-A1-102012 214 912
- US-A1- 2016 159 381

## Beschreibung

Die vorliegende Erfindung bezieht sich auf ein Verfahren zur Berücksichtigung mindestens einer positionsabhängigen Information zum Bremsvermögen auf einem Streckenabschnitt zum Betrieb von Fahrzeugen, insbesondere Schienenfahrzeugen.

Beim Betrieb von Schienenfahrzeugen stellt das Bremsvermögen, unter welchem sowohl die Fähigkeit eines Schienenfahrzeugs, unter Einfluss der Umwelt eine gewünschte Verzögerung bis hin zum Stillstand zu erreichen, als auch eine damit verbundene Einsatzmöglichkeit verschiedener Bremssysteme des Schienenfahrzeugs verstanden wird, eine zentrale Rolle dar. Dabei sind mehrere Aspekte zu betrachten.

Unter sicherheitskritischen Gesichtspunkten ist die Kenntnis des Bremsvermögens auf einem Streckenabschnitt unverzichtbar, um ein Schienenfahrzeug sicher an einem vorgegebenen Haltepunkt zum Stillstand zu bringen. Dabei kann es sich bei einem Haltepunkt um einen vorgesehenen, also planmäßigen Haltepunkt, wie zum Beispiel einen Bahnhof oder ein Haltesignal handeln, jedoch können unter Haltepunkten ebenfalls außerplanmäßige bzw. unvorhergesehene Positionen verstanden werden. Dabei kann es sich um mögliche Hindernisse oder Objekte auf der Strecke handeln, wobei ein Überfahren dieser Haltepunkte möglicherweise den Zusammenstoß mit dem Objekt und im schlimmsten Fall einen Personenschaden zur Folge haben kann.

Daher werden heute für den Fahrbetrieb Informationen zum Bremsvermögen einzelner Streckenabschnitte katalogisiert und somit als statische bzw. quasi statische Informationen vorgehalten, wonach ein Befahren eines entsprechenden Streckenabschnitts aufgrund dieser Informationen erfolgt. Unter quasi statischen Informationen sind dabei Informationen zu verstehen, welche sich nur vergleichsweise langsam ändern, wie z.B. Baustellenpositionen, Baumbestand oder damit verbundener Laubfall. Allerdings entsprechen diese Informationen oftmals nicht in real vorliegenden Bedingungen auf der Strecke.

Stellt ein Fahrer eines Schienenfahrzeugs nachdem er beispielsweise ein Signal überfahren hat fest, dass das Bremsvermögen auf diesem Abschnitt, auf dem er sich gerade befand, vermindert ist, so kann er dies an die Leitstelle weitergeben, welche diese Information an nachfolgende Schienenfahrzeuge übermittelt. Zuweilen besteht auch eine Meldepflicht solcher Ereignisse, um Abschnitte mit verringertem Bremsvermögen zu erfassen. Bei Häufung dieser Ereignisse in einem Streckenabschnitt wird beispielsweise durch die Leitstelle vorrübergehend eine Beschränkung der maximal zulässigen Geschwindigkeit erwirkt.

Um der Problematik des verminderten Bremsvermögens zu begegnen, werden auch jahreszeitabhängige Fahrpläne für Schienenfahrzeuge ausgegeben wobei ein Winterfahrplan in der Regel ein schlechteres Bremsvermögen berücksichtigt und somit in die Fahrzeiten beispielsweise verringerte Maximalgeschwindigkeiten eingerechnet sind.

Um das Bremsvermögen immer wieder zuverlässig zu bestimmen müssten aktuell Messfahrten unternommen werden, die immer wieder kritische Streckenabschnitte hinsichtlich ihres Bremsvermögens untersuchen. Diese Messfahrten stellen jedoch einen enormen Kostenfaktor dar und werden daher nur in Ausnahmefällen unternommen.

Vielmehr wird ein möglicherweise verringertes Bremsvermögen dadurch berücksichtigt, dass Schienenfahrzeuge nicht mit dem mindestens benötigten Abstand zueinander fahren, um bei einer Bremsung des vorderen Fahrzeugs noch ohne Kollision zum Stillstand zu kommen, sondern es werden zusätzlich Sicherheiten in den Abstand der Schienenfahrzeuge mit eingerechnet, wodurch sich größere Fahrabstände ergeben.

Dieses Vorgehen führt jedoch dazu, dass die verfügbare Streckenkapazität nicht voll ausgeschöpft wird, wodurch sich für den Schienennetzbetreiber ein wirtschaftlicher Nachteil ergibt.

Aus der US 2016 / 0 159 381 A1 sind ein System und ein Verfahren zum Untersuchen einer Strecke bekannt. Dabei wird von einem ersten Fahrzeug ein Parameter zur Bestimmung des Zustands der Strecke bestimmt und an mindestens ein weiteres Fahrzeug übermittelt.

Aus der DE 10 2012 214 912 A1 ist ein Verfahren zum direkten drahtlosen Datenaustausch zwischen sich bewegenden Verkehrsteilnehmern bekannt.

Schließlich ist aus der DE 10 2011 075 218 A1 ein Verfahren zum Betreiben spurgebundener Fahrzeuge bekannt, wobei zwischen einem ersten spurgebundenen Fahrzeug und einem zweiten spurgebundenen Fahrzeug den zukünftigen Fahrbetrieb zumindest eines der beiden spurgebundenen Fahrzeuge betreffende Fahrinformationen übermittelt werden.

Dieser Erfindung liegt die Aufgabe zugrunde ein Verfahren sowie eine Vorrichtung zur Durchführung dieses Verfahrens bereitzustellen, welches in der Lage ist, Informationen bezüglich des Bremsvermögens eines Streckenabschnitts sicher zu ermitteln sowie diese Informationen zur Planung des weiteren Betriebsablaufs zu nutzen und insbesondere an andere Schienenfahrzeuge weiterzugeben.

Diese Aufgabe wird mittels der unabhängigen und nebengeordneten Ansprüche gelöst. Vorteilhafte Weiterbildungen sind Gegenstand der Unteransprüche.

Gegenstand der Erfindung ist ein Verfahren, welches vorzugsweise positionsbezogene Informationen bezüglich des Bremsvermögens eines Streckenabschnitts sammelt und diese zur weiteren Beeinflussung eines Fahrzeugs weiterverarbeitet.

Vorzugsweise findet eine Ergänzung dieser Informationen durch die Ermittlung weiterer Informationen statt.

Vorzugsweise verfügt das Fahrzeug über gesteuerte oder geregelte Systeme, welche den Fahrer unterstützen oder sogar den Betrieb des Fahrzeugs gänzlich übernehmen.

Dabei kann es sich um die Unterstützung des Fahrers bis hin zum autonomen Fahrbetrieb handeln.

Vorzugsweise findet die Ermittlung der Position, welche mit der Information des Bremsvermögens an dieser Position verknüpft wird, mittels im Fahrzeug vorhandener Vorrichtungen und Systeme statt.

Beispielsweise sind heute in Fahrzeugen üblicherweise GPS-Empfänger verbaut, welche eine Positionsbestimmung des Fahrzeugs ermöglichen. Diese Positionsinformation kann anschließend durch das Verfahren weiter verarbeitet werden.

Vorzugsweise wird zur Beeinflussung des Fahrzeugs mindestens ein Betriebsparameter des Fahrzeugs aufgrund der ermittelten Informationen zum Bremsvermögen oder weiterer Informationen verändert.

Vorzugsweise übermittelt das Fahrzeug die ermittelten Informationen zum Bremsvermögen oder weitere Informationen an einen Empfänger.

Vorzugsweise erhält das Fahrzeug zudem positionsbezogene Informationen bezüglich des Bremsvermögens der Strecke oder weitere Informationen von einem Sender.

Vorzugsweise erfolgt die Übermittlung der positionsbezogenen Informationen des Bremsvermögens der Strecke drahtlos oder leiterbasiert, wobei auf gängige Kommunikationssysteme zurückgegriffen werden kann, wie sie zum Beispiel in den Standards des European Train Control System (ETCS) oder anderer Zugbeeinflussungssysteme vorgesehen sind.

In einer anderen vorteilhaften Ausführungsform erfolgt die Übermittlung mittels speziell dafür vorgesehener und eingerichteter Kommunikationsvorrichtungen.

Vorzugsweise handelt es sich bei den Sendern und Empfängern um weitere Fahrzeuge bzw. wegseitige Einrichtungen.

Vorzugsweise sind die Fahrzeuge als Schienenfahrzeuge ausgeführt, welche auf einer Strecke fahren, welche von wegseitigen Einrichtungen überwacht wird.

Vorzugsweise sind unter wegseitigen Einrichtungen Leitstände, Stellwerke, Signale oder dergleichen zu verstehen, welche direkt oder indirekt Einfluss auf den Fahrbetrieb der Schienenfahrzeuge nehmen.

Vorzugsweise ermittelt das erste Schienenfahrzeug positionsbezogene Informationen zum Bremsvermögen auf dem aktuellen Streckenabschnitt, wobei unter dem Bremsvermögen die Fähigkeit zu verstehen ist, eine geforderte Verzögerung zur Verfügung zu stellen. Diese Fähigkeit ist unter anderem abhängig vom Kraftschluss des Streckenabschnitts sowie der Möglichkeit, unterschiedliche Bremssysteme des Schienenfahrzeugs (z.B. eine konventionelle Reibbremse, eine Magnetschienenbremse oder eine Wirbelstrombremse) zu benutzen.

Der Kraftschluss, speziell charakterisiert durch den Kraftschlussbeiwert, beschreibt das Anhaften des Rades auf der Schiene und stellt somit die physikalische Grenze zur Übertragung der Bremskraft an die Schiene dar. Der Kraftschluss ist von diversen Faktoren abhängig, wie zum Beispiel:
- Temperatur
- Feuchtigkeit auf der Schiene
- Verschmutzung der Schiene
- Materialpaarung
- Radaufstandskraft

Zudem verändert ein über den entsprechenden Streckenabschnitt gefahrenes Schienenfahrzeug den Kraftschlussbeiwert, indem es beispielsweise durch einen Bremsvorgang oder durch Einsatz z.B. einer Magnetschienenbremse einen bestehenden Feuchtigkeitsfilm von der Schiene nimmt oder eine Verschmutzung der Schiene verändert oder beseitigt, wodurch die Schiene z.B. getrocknet wird und sich der Kraftschlussbeiwert verbessert.

Des Weiteren verändert auch der Betrieb von Schienenfahrzeugen weitere Zustände der Schiene. So erwärmt sich beispielsweise die Schiene bei einem Einsatz der Wirbelstrombremse durch die erzeugten Wirbelströme derart, dass ein nachfolgender Zug die Erwärmung bei der Entscheidung mit welchem Bremssystem gebremst werden soll vorzugsweise mit berücksichtigt, um die thermische Belastung der Schiene zu verringern.

Vorzugsweise berücksichtigt ein zweites Schienenfahrzeug diese Informationen bei der Auswahl des Bremssystems, welches zur Verzögerung des Schienenfahrzeugs genutzt werden soll.

In einer weiteren vorteilhaften Ausführungsform der Erfindung ist das Schienenfahrzeug in der Lage, die eigene Beeinflussung des Bremsvermögens der Strecke durch den eigenen Betrieb auf dieser Strecke zu bestimmen.

Vorzugsweise ermittelt das Schienenfahrzeug dabei eine Veränderung des Kraftschlusses aufgrund einer durch das Schienenfahrzeug durchgeführten Bremsung, einer Beschleunigung, oder eines einfachen Befahrens der Strecke.

Vorzugsweise ermittelt das Schienenfahrzeug weitere Zustandsgrößen der Strecke, welche zur Bestimmung des Bremsvermögens der Strecke geeignet sind. So wird beispielsweise eine Erwärmung der Schiene durch einen Einsatz der Wirbelstrombremse oder einer konventionellen Bremse durch das Verfahren bestimmt.

Vorzugsweise nutzt das Schienenfahrzeug zur Bestimmung der Informationen bezüglich des Bremsvermögens der Strecke, die schienenfahrzeugseitig vorhandenen Sensoriken und/oder Vorrichtungen und/oder Verfahren. So kann beispielsweise auf den Kraftschlussbeiwert mittels der Auswertung des Radschlupfs bei einer Bremsung geschlossen werden, wobei der Radschlupf über fahrzeugeigene Raddrehzahlsensoren ermittelt werden kann.

Vorzugsweise kann weiterhin eine Erwärmung der Schiene mittels einer Ermittlung der Bremsleistung, sei es von einer Magnetschienenbremse, einer Wirbelstrombremse oder einer konventionellen Bremse oder dergleichen oder auch mittels einer Radschlupf-Betrachtung erfolgen.

Vorzugsweise ermittelt das Schienenfahrzeug eine Abtrocknung oder Veränderung der Eigenschaften der Strecke durch das eigene Befahren, so dass auf einen neuen Kraftschluss- bzw. Feuchtezustand hinter dem Zug geschlossen werden kann.

Vorzugsweise werden diese Ermittlungsschritte durch weitere Informationen, insbesondere der Umgebungstemperatur, den Wetterbedingungen, der Feuchte der Strecke und dergleichen ergänzt, wodurch eine genauere Bestimmung des Bremsvermögens der Strecke ermöglicht wird. Dabei werden diese Informationen über unterschiedliche Quellen erschlossen. Vorzugsweise werden die Daten durch die Schienenfahrzeuge auf der Strecke oder die wegseitigen Einrichtungen erfasst oder mittels weiterer Quellen, wie Wetterstationen, ergänzt.

In einer weiteren vorteilhaften Ausführungsform der Erfindung nutzt das Schienenfahrzeug zur Bestimmung des Bremsvermögens der Strecke zusätzliche Sensorik, welche zu diesem Zweck am Schienenfahrzeug verbaut wird.

Vorzugsweise ist diese zusätzliche Sensorik in der Lage das Bremsvermögen auf der Strecke kontinuierlich, also auch bei Fahrten mit wenig Verzögerung oder Beschleunigung bis hin zu Fahrten mit konstanter Geschwindigkeit zu bestimmen, wodurch insbesondere ein durchgehendes Profil des Bremsvermögens einer Strecke geschaffen wird.

Vorzugsweise werden auch Informationen bezüglich Objekten an oder auf der Strecke übermittelt, welche eine Gefahr für den Fahrbetrieb darstellen. Diesen Informationen kann erfindungsgemäß eine Veränderung der Betriebsparameter des Schienenfahrzeugs folgen.

Vorzugsweise werden die Informationen zum Bremsvermögen der Strecke ergänzt um weitere Informationen, wie zum Beispiel um die Änderungswahrscheinlichkeiten der zuvor ermittelten Informationen. Dazu sind beispielsweise Rechenmodelle denkbar, die das Abkühlverhalten der Schiene nach einer Aufheizung durch eine Wirbelstrombremse unter Berücksichtigung der Umgebungstemperatur, oder das Abtrocknen eines Feuchtigkeitsbeschlags der Schiene, über der Zeit ermitteln. Des Weiteren ist denkbar, die Informationen zum Bremsvermögen der Strecke durch eine Information zur Verschmutzung der Schiene zu ergänzen.

Vorzugsweise übermitteln weitere Schienenfahrzeuge Informationen über fahrzeugseitige Bremssysteme bzw. deren Betriebs- bzw. Verschleißzustände oder deren Einsatzmöglichkeit. Diese Informationen werden für die leichtere Individualisierung des Bremsvermögens eines Schienenfahrzeugs auf einer Strecke benötigt, wodurch für jedes Schienenfahrzeug individuelle Betriebsparameter oder Fahrempfehlungen bestimmt werden können.

Vorzugsweise werden auf Grundlage der durch die Schienenfahrzeuge und weitere Quellen zur Verfügung gestellten positionsbezogenen Informationen optimale Abstände der Schienenfahrzeuge untereinander ermittelt, so dass sich situationsbedingt ein minimal nötiger Abstand der Fahrzeuge untereinander einstellt, wodurch sichergestellt ist, dass die Fahrzeuge jederzeit ohne das Risiko einer Kollision angehalten werden können.

Vorzugsweise werden die Abstände der Schienenfahrzeuge derart ermittelt, dass sich eine maximale Auslastung der Strecke einstellt, wodurch ein wirtschaftlicher Vorteil erzielt wird.

Vorzugsweise ermittelt das Verfahren unter Berücksichtigung der zuvor ermittelten Informationen mindestens einen Betriebsparameter mindestens eines Schienenfahrzeugs.

Vorzugsweise ist der mindestens eine Betriebsparameter eine situationsabhängige Bremskurve für jedes Fahrzeug, welche vorzugsweise einen Soll-Geschwindigkeitsverlauf darstellt, welcher im Wesentlichen die positionsabhängige Maximalgeschwindigkeit des Schienenfahrzeugs vorgibt und ein sicheres Anhalten am Haltepunkt ermöglicht.

In einer anderen vorteilhaften Ausführungsform der Erfindung werden durch das Verfahren keine situationsabhängigen Bremskurven ermittelt, sondern andere Informationen, wie zum Beispiel eine erforderliche Bremsleistung, um ein sicheres Anhalten an einem Haltepunkt zu ermöglichen.

Vorzugsweise können in einer weiteren Ausführungsform der Erfindung bei Erkennung einer kritischen Situation auf der Strecke, welche sich zum Beispiel durch ein Hindernis und vermindertes Bremsvermögen darstellt, Aktionen im Schienenfahrzeug ausgelöst werden, um jederzeit ein sicheres Anhalten zu gewährleisten. Bei diesen Aktionen kann es sich beispielsweise um eine automatische Anpassung der Fahrzeuggeschwindigkeit, oder einen automatischen Bremseingriff handeln.

Vorzugsweise stellt die Erfindung dabei eine Ergänzung bzw. Erweiterung des automatischen Fahrbetriebs dar.

Die einzelnen Verfahrensschritte werden vorzugsweise nicht zwingend nur von einem Schienenfahrzeug, oder einer wegseitigen Einrichtung durchgeführt. Vielmehr sind einzelne Verfahrensschritte auf verschiedene Schienenfahrzeuge und wegseitige Einrichtungen verteilt, welche über geeignete Verbindungen Daten untereinander austauschen.

In einer vorteilhaften Ausführungsform der Erfindung erfolgt die Ermittlung der positionsbezogenen Informationen des Bremsvermögens durch die sich auf der Strecke befindlichen Schienenfahrzeuge, wobei in einer wegseitigen Einrichtung, welche den entsprechenden Streckenabschnitt überwacht, die erfassten Informationen zusammengeführt werden und weitere Aktionen bzw. Fahrempfehlungen daraus bestimmt werden. Diese Aktionen bzw. Fahrempfehlungen werden anschließend an folgende Schienenfahrzeuge übermittelt, welche mit diesen Prämissen den entsprechenden Streckenabschnitt befahren.

In einer vorteilhaften Ausführungsform der Erfindung erfolgt bei als zu schlecht detektiertem Kraftschluss auf einem Streckenabschnitt eine Auslöse- bzw. Trigger-Aktion zur Verbesserung des Kraftschlusses auf diesem Streckenabschnitt. Dabei kann es sich um eine Statusmeldung an einer, dem Streckenabschnitt zugeordneten, wegseitigen Einrichtung handeln, die aufgrund dieser Trigger-Aktion die Verbesserung des Kraftschlusses koordiniert. Beispielsweise wird der Kraftschluss anschließend durch Wartungsaktionen wie Schleifen der Schiene oder Reinigungungsaktionen wieder verbessert beispielsweise durch ein, speziell für diesen Zweck zur Verfügung stehendes, Fahrzeug. Zudem ist auch denkbar, dadurch weitere Wartungsaktionen wie beispielsweise Baumschnitt anzufordern.

In einer weiteren vorteilhaften Ausführungsform liegt die Erfindung als Computerprogrammprodukt mit auf einem maschinenlesbaren Träger gespeichertem Programmcode zur Durchführung des Verfahrens vor, wobei dies die Möglichkeit eröffnet, die Erfindung auf neue bzw. bestehende Schienenfahrzeuge und/oder wegseitige Einrichtungen zu übertragen.

In einer weiteren vorteilhaften Ausführungsform liegt die Erfindung als Steuervorrichtung vor, welche in mindestens einem Schienenfahrzeug verbaut ist und das zuvor beschriebene Verfahren durchführt.

In einer weiteren vorteilhaften Ausführungsform liegt die Erfindung als Steuervorrichtung vor, welche in mindestens einer wegseitigen Einrichtung verbaut ist und das zuvor beschriebene Verfahren durchführt.

In einer weiteren vorteilhaften Ausführungsform liegt die Erfindung als mehrteilige Steuervorrichtung vor, wobei mindestens ein Teil in mindestens einem Schienenfahrzeug vorgesehen ist und mindestens ein weiterer Teil in mindestens einer wegseitigen Einrichtung vorgesehen ist, wobei alle Teile in Kombination das zuvor beschriebene Verfahren durchführen.

Vorzugsweise weist die Steuervorrichtung, unabhängig davon, ob sie ein- oder mehrteilig ausgeführt ist, mindestens eine Schnittstelle zu einem Anwender auf.

Diese Schnittstelle ist vorzugsweise als Handgerät ausgebildet, welches geeignet ist, von dem Anwender mitgeführt zu werden.

In einer anderen vorteilhaften Ausführungsform der Erfindung ist die Schnittstelle stationär in mindestens einem Schienenfahrzeug und/oder mindestens einer wegseitigen Einrichtung verbaut.

Über diese Schnittstelle ist ein Anwender vorzugsweise in der Lage, Informationen zum Bremsvermögen auf der Strecke selbst zur weiteren Verarbeitung zur Verfügung zu stellen und/oder Auslöse-Aktionen selbst zu veranlassen.

Die Erfindung ist vorzugsweise in jeder Ausführungsform mit anderen Verfahren oder Vorrichtungen zur Steuerung eines Schienenfahrzeugs kombinierbar und weist vorzugsweise entsprechende Schnittstellen auf, um mit anderen Verfahren oder Vorrichtungen Signale oder Informationen austauschen zu können.

Vorzugsweise ist die Erfindung in einen Verbund zur Fahrzeugsteuerung eingebunden, in dem die Rückmeldungen sämtlicher Teilsysteme oder Teilen davon verarbeitet werden.

Im Folgenden erfolgt die Beschreibung der Erfindung anhand bevorzugter Ausführungsbeispiele unter Bezugnahme auf die beigefügten Zeichnungen.

Im Einzelnen zeigt:
- Fig. 1: eine Ausführungsform der Erfindung, bei der die Kommunikation über eine wegseitige Einrichtung erfolgt.
- Fig. 2: eine Ausführungsform der Erfindung, bei der die Kommunikation direkt zwischen zwei Schienenfahrzeugen erfolgt.
- Fig. 3: einen Ablaufplan des erfindungsgemäßen Verfahrens aus Fig. 1.
- Fig. 4: einen Ablaufplan des erfindungsgemäßen Verfahrens aus Fig. 2.
- Fig. 5: einen Verlauf einer Bremskurve, welche durch das erfindungsgemäße Verfahren beeinflusst ist, im Vergleich zu einer Bremskurve entsprechend dem Stand der Technik.
- Fig. 6: einen Verlauf einer weiteren Bremskurve, welche durch das erfindungsgemäße Verfahren beeinflusst ist, im Vergleich zu einer Bremskurve entsprechend dem Stand der Technik.

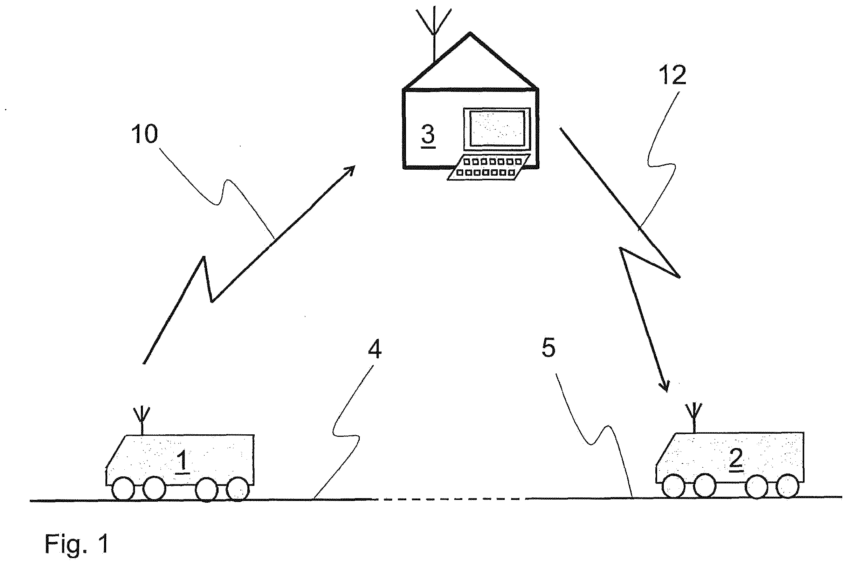

Fig. 1 zeigt eine Ausführungsform der Erfindung, bei der die Kommunikation über eine wegseitige Einrichtung 3 sichergestellt ist.

Auf einem Streckenabschnitt 4 befindet sich ein erstes Schienenfahrzeug 1, welches über eine Datenverbindung 10 mit einer wegseitigen Einrichtung 3 in Verbindung steht. Dabei kann die wegseitige Einrichtung 3 ein Fahrdienstleitstand, ein Stellwerk oder eine andere wegseitige Vorrichtung sein.

Dem ersten Schienenfahrzeug 1 folgt auf selber Strecke auf einem Streckenabschnitt 5 ein zweites Schienenfahrzeug 2. Dieses zweite Schienenfahrzeug 2 steht über eine Datenverbindung 12 mit der wegseitigen Einrichtung 3 in Verbindung.

Über die Datenverbindung 10 übermittelt das erste Schienenfahrzeug 1 positionsbezogene Informationen bezüglich des Streckenabschnitts 4 an die wegseitige Einrichtung 3. Dabei handelt es sich in erster Linie um Informationen bezüglich des Bremsvermögens, welches auf dem Streckenabschnitt 4 vorherrscht und welche durch das erste Schienenfahrzeug 1 ermittelt werden.

Das Bremsvermögen charakterisierende Informationen sind unter anderem Informationen zum Kraftschluss oder Informationen zur Beschaffenheit der Schiene, wie zum Beispiel der Schienentemperatur. Die Schienentemperatur stellt in diesem Zusammenhang den begrenzenden Parameter für den Einsatz der Wirbelstrombremse dar, da sich die Schiene durch den Einsatz der Wirbelstrombremse erwärmt und vorzugsweise ein zu starkes Aufheizen der Schiene verhindert werden soll.

Erfindungsgemäß ermittelt das erste Schienenfahrzeug 1 diese positionsbezogenen Informationen wenn möglich kontinuierlich, oder während bestimmter Betriebsereignisse, wie zum Beispiel einer Bremsung oder Beschleunigung.

Diese Informationen werden in der wegseitigen Einrichtung 3 weiterverarbeitet und über eine Datenverbindung 12 an das zweite Schienenfahrzeug 2 übermittelt. Zudem ist die wegseitige Einrichtung 3 in der Lage, dem zweiten Schienenfahrzeug 2 Fahrempfehlungen, bzw. Sollwertvorgaben aus den Informationen des ersten Schienenfahrzeugs 1 zu generieren und zu übermitteln.

Das zweite Schienenfahrzeug 2 nutzt somit die ermittelten Daten des ersten Schienenfahrzeugs 1 und ist dadurch in der Lage, das Befahren des Streckenabschnitts 4 zu planen bzw. den Streckenabschnitt 4 entsprechend der Planung der wegseitigen Einrichtung 3 zu befahren.

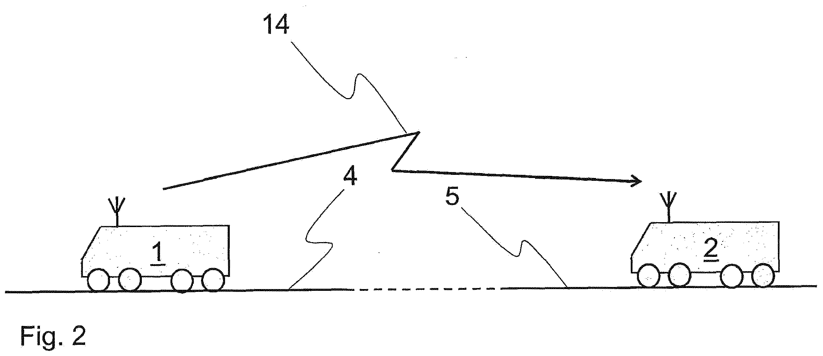

Fig. 2 zeigt eine Ausführungsform der Erfindung, bei der die Kommunikation direkt zwischen zwei Schienenfahrzeugen erfolgt.

Im Wesentlichen entspricht diese Ausführungsform derjenigen aus Fig. 1, jedoch erfolgt die Kommunikation des ersten Schienenfahrzeugs 1 direkt mit dem zweiten Schienenfahrzeug 2 über eine Datenverbindung 14 und nicht indirekt über eine zwischengeschaltete wegseitige Einrichtung 3.

In beiden beschriebenen Ausführungsbeispielen fungiert das erste Schienenfahrzeug 1 als Messfahrzeug, welches dem zweiten Schienenfahrzeug 2 Informationen über dessen vorausliegenden Streckenabschnitt 4 liefert.

Darüber hinaus ist das erste Schienenfahrzeug 1 in der Lage zu ermitteln, wie sich die positionsbezogenen Informationen des Streckenabschnitts 4 durch die Nutzung des ersten Schienenfahrzeugs 1 verändern.

Beispielsweise verändert der Einsatz der Magnetschienenbremse des ersten Schienenfahrzeugs 1 den Kraftschlussbeiwert des Streckenabschnitts 4, indem Feuchtigkeit oder Verschmutzungen, welche sich auf der Schiene befinden, durch die Magnetschienenbremse verändert oder beseitigt werden. Dadurch kann eine Erhöhung des Kraftschlussbeiwerts des Streckenabschnitts 4 erreicht werden. Diese Information wird dem zweiten Schienenfahrzeug 2 direkt zugänglich gemacht, wodurch dieses das Befahren des Streckenabschnitts 4 planen kann.

Beispielsweise befährt das zweite Schienenfahrzeug 2 den Streckenabschnitt 4 bei einem als verringert gemeldeten Kraftschlussbeiwert nun mit verringerter Maximalgeschwindigkeit, da sich das Bremsvermögen auf diesem Streckenabschnitt 4 verschlechtert hat und somit eine verringerte Maximalgeschwindigkeit ein sicheres Anhalten z.B. an einem Bahnhof ermöglicht.

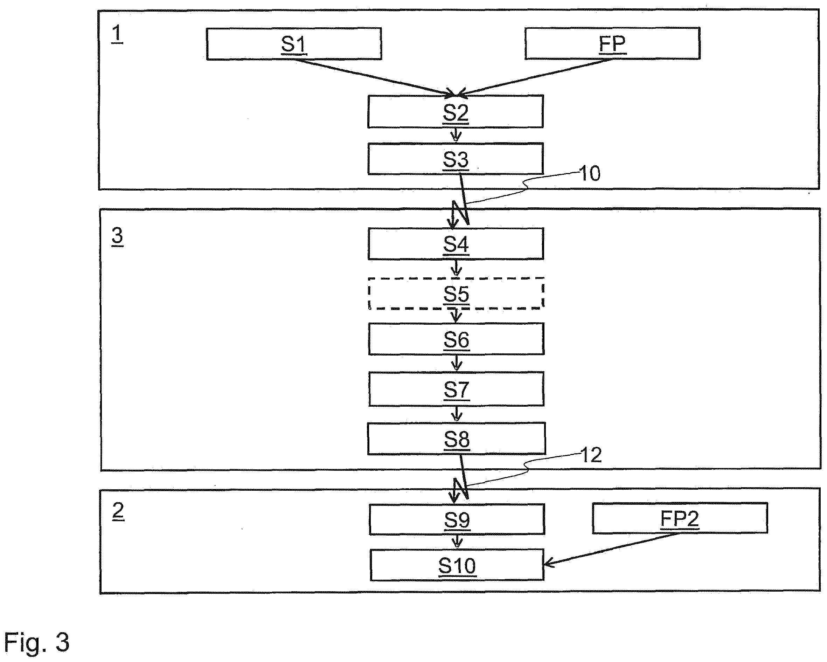

Fig. 3 zeigt einen Ablaufplan des erfindungsgemäßen Verfahrens entsprechend der Konstellation gemäß Fig. 1

Das erste Schienenfahrzeug 1 führt dabei folgende Schritte des Verfahrens aus:

### Erfassen von Messdaten S1:

Während des Fahrbetriebs misst das erste Schienenfahrzeug 1 permanent Streckenparameter, wie zum Beispiel die Schienentemperatur, die Umgebungstemperatur die Feuchte, den Radschlupf bei Bremsung oder Beschleunigung und/oder anderen Fahrzuständen.

### Ermittlung des aktuellen Bremsvermögens S2:

Aus den Informationen aus S1 und zusätzlichen Fahrzeugparametern FP des ersten Schienenfahrzeugs 1, wie zum Beispiel der verfügbaren Bremsleistung oder dem Zustand des Bremssystems, beispielsweise dem Verschleißzustand der Bremsbeläge, oder angelegten Bremsdrücken oder Bremsmomenten, wird hier das aktuelle Bremsvermögen des Streckenabschnitts 4 ermittelt, auf dem sich das erste Schienenfahrzeug 1 befindet.

### Versenden der Informationen S3:

Die in S2 generierten Informationen werden in Schritt S3 mittels der Datenverbindung 10 an eine wegseitige Einrichtung 3 übermittelt. Die Datenverbindung 10 kann dabei als Funkverbindung oder in anderer geeigneter Form, zum Beispiel unter Ausnutzung vorhandener Infrastruktur, wie der unterschiedlichen, zuvor beschriebenen ETCS-Systeme ausgebildet sein. Zusätzlich kann die Übermittlung der Fahrzeugparameter FP erfolgen, welche zur Generierung weiterer Fahrempfehlungen herangezogen werden können.

Die weitere Verarbeitung der Informationen bezüglich des Bremsvermögens des Streckenabschnitts 4 erfolgt nun in der wegseitigen Einrichtung 3:

### Empfang der Informationen S4:

Die wegseitige Einrichtung 3 führt über die Datenverbindung 10 den Empfang S4 der Information des ersten Schienenfahrzeugs 1 durch und bereitet diese eingangsseitig zur weiteren Verarbeitung auf.

### Plausibilisierung S5:

Gegebenenfalls erfolgt anschließend die Plausibilisierung S5 der Informationen, wobei nicht plausible bzw. unrealistische Informationen gestrichen und nicht weiter verarbeitet werden.

### Speicherung S6:

Anschließend erfolgt die Speicherung S6 der Informationen in einer Datenbank, welche Standardwerte zur Befahrung des Streckenabschnitts 4 enthält. Diese Standardwerte können zum Beispiel Informationen über den Kraftschlussbeiwert, oder die zulässige Maximalgeschwindigkeit sein. Erfindungsgemäß werden diese Informationen anstelle der Standardwerte an die weiteren Schienenfahrzeuge übermittelt. Sollten Informationen über den Streckenabschnitt 4 nicht aktuell sein bzw. fehlen, so greift das Verfahren auf die Standardwerte der Datenbank zurück.

### Definition von Fahrempfehlungen S7:

In einem weiteren Verfahrensschritt S7 werden Fahrempfehlungen zur Befahrung des Streckenabschnitts 4 ermittelt. Dabei sind unter Fahrempfehlungen insbesondere maximal zulässige Geschwindigkeiten, mögliche Anhaltewege und dergleichen zu verstehen. Gleichzeitig erfolgt in diesem Schritt auch eine Planung der Minimalabstände zwischen den einzelnen Schienenfahrzeugen, welche sich auf der Strecke befinden.

Dadurch wird eine effizientere Ausnutzung der Streckenkapazität ermöglicht, indem eine möglichst dichte Aufeinanderfolge von Schienenfahrzeugen auf der Strecke sichergestellt wird, welche lediglich den minimal erforderlichen Sicherheitsabstand, welcher sich aus den zuvor ermittelten positionsbezogenen Informationen ergibt, einhalten.

In einer nicht dargestellten Ausführungsform erfolgt die Planung der Minimalabstände und weiterer Fahrempfehlungen unter Berücksichtigung der individuellen Fahrzeugparameter der nachfolgenden Fahrzeuge, wobei diese Informationen statisch vorliegen können, oder dynamisch während des Betriebes erzeugt werden können. So kann bei der Planung der Minimalabstände und weiterer Fahrempfehlungen beispielsweise auf den Verschleißzustand des Bremssystems oder auf das Fahrzeuggewicht eingegangen werden.

### Versenden der Informationen S8:

In einem weiteren Schritt S8 erfolgt die Versendung der so generierten Informationen von der wegseitigen Einrichtung 3 an das zweite Schienenfahrzeug 2 über die Datenverbindung 12. Die Datenverbindung 12 kann dabei als Funkverbindung oder in anderer geeigneter Form, zum Beispiel unter Ausnutzung vorhandener Infrastruktur, wie der unterschiedlichen, zuvor beschriebenen ETCS-Systeme ausgebildet sein.

Die weitere Verarbeitung der Informationen bezüglich des Bremsvermögens des Streckenabschnitts 4 erfolgt nun in dem zweiten Schienenfahrzeug 2:

### Empfang der Informationen S9:

Das zweite Schienenfahrzeug 2 empfängt die Informationen der wegseitigen Einrichtung 3 und bereitet diese zur weiteren Verarbeitung im zweiten Schienenfahrzeug 2 auf.

### Auslösen von Aktionen S10:

Aufgrund der in Schritt S9 empfangenen und aufbereiteten Informationen und der Fahrzeugparameter FP2 des zweiten Schienenfahrzeugs 2, wie beispielsweise dem Verschleißzustand des eigenen Bremssystems, werden in dem zweiten Schienenfahrzeug 2 Aktionen ausgelöst, wie zum Beispiel das Anpassen der Geschwindigkeit auf die nun zulässige Maximalgeschwindigkeit, oder dem Einstellen des entsprechenden Abstands zum vorausfahrenden ersten Schienenfahrzeug 1, welche insbesondere bei automatisierten Fahrbetrieb selbstständig durch das zweite Schienenfahrzeug 2 durchgeführt werden. Befindet sich das zweite Schienenfahrzeug 2 nicht im automatisierten Fahrbetrieb, bzw. ist dieser nicht vorhanden oder nicht verfügbar, so können auch dem Fahrer Informationen über den vorausliegenden Streckenabschnitt 4 übermittelt werden, woraufhin dieser entsprechende Maßnahmen ergreift.

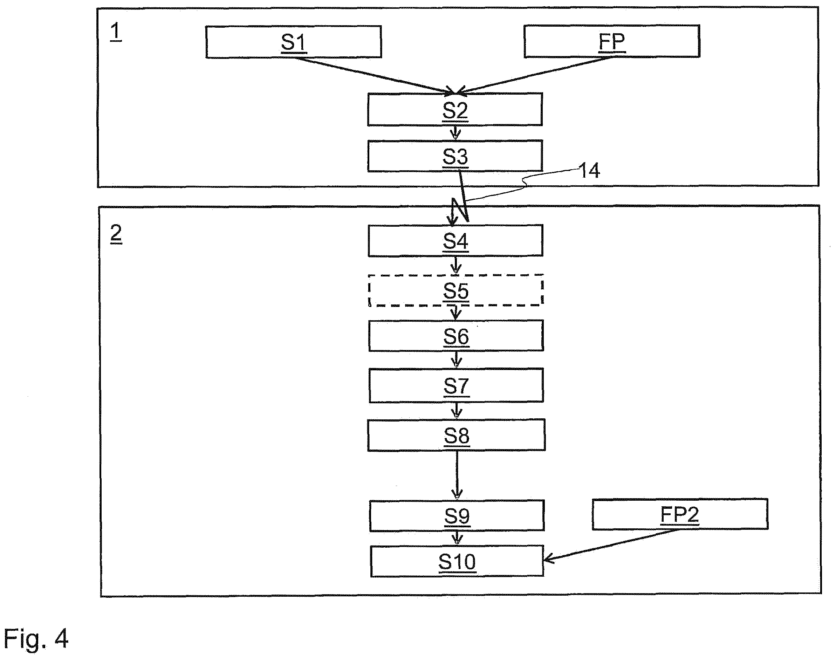

Fig. 4 zeigt einen Ablaufplan des erfindungsgemäßen Verfahrens entsprechend einer Konstellation gemäß Fig. 2.

Die Abfolge der Schritte S1 bis S10 entspricht dabei der Abfolge des Verfahrens aus Fig. 3, jedoch werden die Schritte der wegseitigen Einrichtung 3 nun durch das zweite Schienenfahrzeug 2 durchgeführt.

Das erste Schienenfahrzeug 1 übermittelt mittels der Datenverbindung 14 die Informationen direkt an das zweite Schienenfahrzeug 2. Die Datenverbindung 14 kann dabei als Funkverbindung oder in anderer geeigneter Form, zum Beispiel unter Ausnutzung vorhandener Infrastruktur, wie der unterschiedlichen, zuvor beschriebenen ETCS-Systeme ausgebildet sein.

Weitere Ausführungsformen der Erfindung gemäß Fig. 3 und Fig. 4 lassen sich durch eine Verschiebung der Grenzen des ersten und zweiten Schienenfahrzeugs 1,2 und der wegseitigen Einrichtung 3 sowie einer Hinzufügung oder Entfernung weiterer Verfahrensschritte bilden.

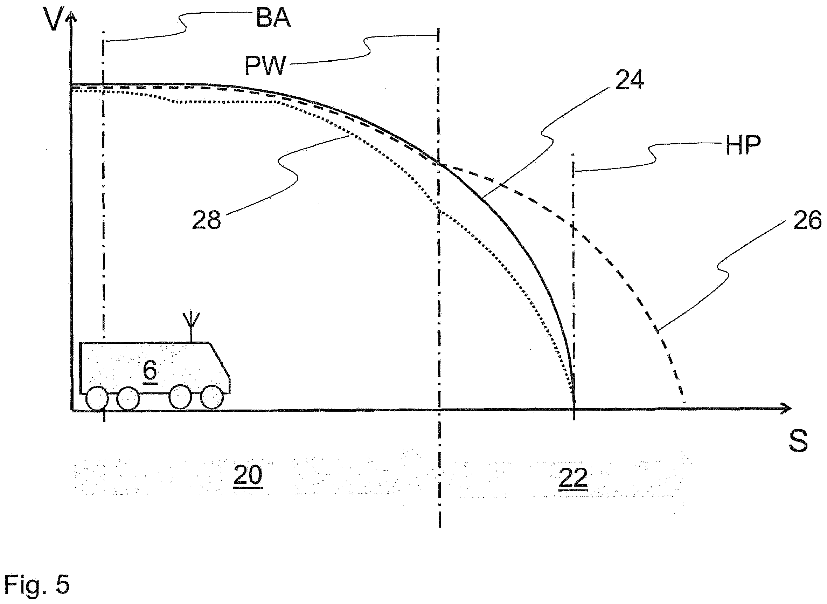

Fig. 5 zeigt einen Verlauf einer Bremskurve, welche durch das erfindungsgemäße Verfahren beeinflusst ist, im Vergleich zu einer Bremskurve entsprechend dem Stand der Technik.

Ein Schienenfahrzeug 6 bewegt sich entlang des Weges S mit der Geschwindigkeit V. Im Abschnitt 20 herrscht dabei normales Bremsvermögen vor, wobei sich ab dem Punkt des Parameterwechsels PW ein Abschnitt 22 mit vermindertem Bremsvermögen anschließt. Im Abschnitt 22 befindet sich ein Haltepunkt HP, an dem das Schienenfahrzeug 6 zum Stillstand gebracht werden soll. Der Haltepunkt kann dabei ein Signal, eine Bahnstation oder ein beliebig gewählter Haltepunkt auf der Strecke sein.

Es ist eine Soll-Bremskurve 24 dargestellt, welche den Verzögerungsverlauf des Schienenfahrzeugs 6 bei normalem Bremsvermögen darstellt. Sollte sich keine Verschlechterung des Bremsvermögens oder auch der Bremsleistung einstellen, würde die Ist-Bremskurve der Soll-Bremskurve 24 folgen und das Schienenfahrzeug 6 würde am Haltepunkt HP zum Stillstand gebracht werden.

Die Ist-Bremskurve 26 zeigt nun den Anhaltevorgang des Schienenfahrzeugs 6 gemäß dem Stand der Technik. Zu Beginn sind dabei in Abschnitt 20 die Ist-Bremskurve 26 und die Soll-Bremskurve 24 identisch, da die Verzögerung in Abschnitt 20 unter Idealbedingungen, also Bedingungen unter welchen die Soll-Bremskurve 24 ermittelt wurde, stattfindet.

Beim Übergang von Abschnitt 20 zu Abschnitt 22, also dem Parameterwechsel PW, ändert sich nun das Bremsvermögen der Strecke. Dies hat zur Folge, dass nun durch den Rad-Schiene-Kontakt weniger Bremskraft übertragen werden kann wodurch die Verzögerung des Schienenfahrzeugs 6 geringer ausfällt. Dadurch kann das Schienenfahrzeug 6 die geforderte Soll-Bremskurve 24 nicht mehr einhalten. Daher liegt ab dem Parameterwechsel PW die Ist-Bremskurve 26 oberhalb der Soll-Bremskurve 24.

Da aufgrund des verminderten Bremsvermögens auf Abschnitt 22 auch keine Zunahme der Bremskraft mehr möglich ist, überfährt das Schienenfahrzeug 6 den Haltepunkt HP und kommt erst danach zum Stillstand.

Erfindungsgemäß erfolgt nun eine situationsabhängige Anpassung der Bremskurve des Schienenfahrzeugs 6, um ein sicheres Anhalten am Haltepunkt HP zu gewährleisten.

Zu Beginn bewegt sich das Schienenfahrzeug 6 im Abschnitt 20 mit normalen Bremsvermögen entsprechend der Soll-Bremskurve 24. Erfindungsgemäß erhält das Schienenfahrzeug 6 die Information, dass sich auf dem folgenden Abschnitt 22 das Bremsvermögen verringert.

Daraufhin führt das Schienenfahrzeug 6 eine Bremskurvenanpassung BA durch, woraus die situationsabhängige Ist-Bremskurve 28 resultiert. Auf die Darstellung einer neuen Soll-Bremskurve wurde verzichtet, da diese mit der Ist-Bremskurve 28 identisch wäre. Das Schienenfahrzeug 6 fährt, nun im Vergleich zur vorigen Soll-Bremskurve 24, den Abschnitt 20 mit verminderter Geschwindigkeit ab und führt die Bremsung schon unter Kenntnis des sich ändernden Bremsvermögens durch.

Dies hat zur Folge, dass die jetzt eingeleitete Verzögerung schon unter Kenntnis des verminderten Bremsvermögens des Abschnitts 22 erfolgt. Die Bremsung wird hier mit einer höheren Verzögerung ausgeführt, so dass das Schienenfahrzeug 6 in den Abschnitt 22 mit verminderter Geschwindigkeit einfährt. Durch den Parameterwechsel PW kann die aktuelle Verzögerung nicht aufrecht erhalten werden, wodurch der Geschwindigkeitsabbau nun mit einem geringeren Gradienten erfolgt. Dadurch stellt sich auch hier ein Knick in der Ist-Bremskurve 28 an der Stelle des Parameterwechsel PW ein. Das Schienenfahrzeug 6 kommt jedoch am Haltepunkt HP zum Stillstand, da es in den Abschnitt 22 mit der nötigen verminderten Geschwindigkeit einfährt.

### Das erfindungsgemäße Verfahren stellt dabei sicher, dass ein Anhalten an einem Haltepunkt HP durch Vorgabe einer entsprechenden situationsabhängigen Bremskurve 28 ermöglicht wird. Dadurch kann einem sich ändernden Bremsvermögen begegnet werden, indem dem Schienenfahrzeug 6 eine neue Bremskurve 28 zur Verfügung gestellt wird.

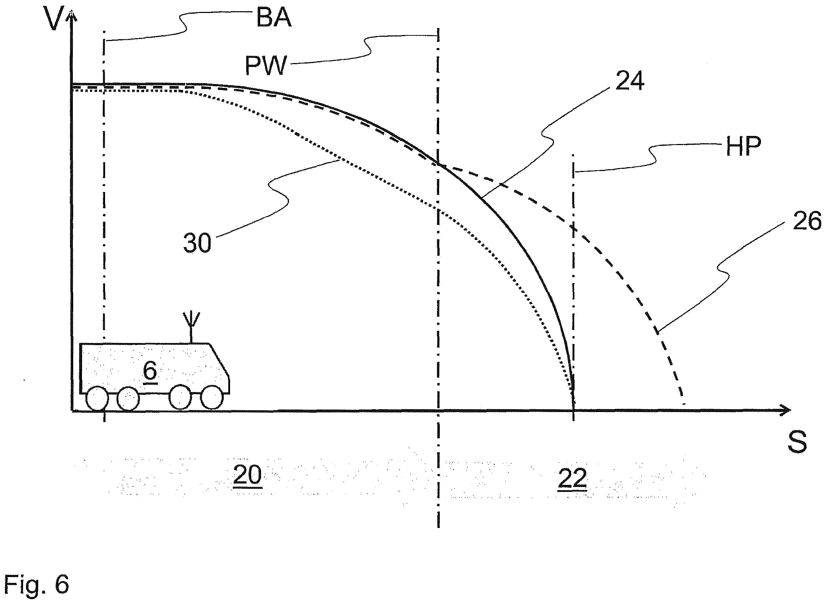

Fig. 6 zeigt einen Verlauf einer weiteren Ist-Bremskurve 30 im Vergleich zu den Bremskurven gemäß dem Stand der Technik.

Im Unterschied zu der Ist-Bremskurve 28 in Fig. 5 wird hier in Abschnitt 20 eine Ist-Bremskurve 30 gewählt, die zudem das Ziel hat, das Einfahren in den Abschnitt 22 möglichst komfortabel zu gestalten.

Dafür werden die Geschwindigkeiten und deren Gradienten, also ihre Verzögerungen so gewählt, dass die Geschwindigkeit und die Verzögerung unmittelbar vor und nach dem Parameterwechsel PW gleich sind.

Dies hat zur Folge, dass sich kein Knick in der Ist-Bremskurve 30 an der Stelle des Parameterwechsel PW einstellt, sondern das Schienenfahrzeug 6 in den Abschnitt 22 mit der nötigen verminderten Geschwindigkeit und Verzögerung einfährt, um im Verlauf der weiteren Bremsung genau am Haltepunkt HP zum Stillstand zu kommen.

Durch den fehlenden Knick in der Ist-Bremskurve 30 werden insbesondere Passagiere geschützt, welche vor einem nahenden Bahnhof, also einem Haltepunkt HP schon aufgestanden sind und stehend, möglicherweise mit Gepäck in der Hand, einen Verzögerungswechsel, also einen Knick im Geschwindigkeitsverlauf nicht gut ausgleichen können und evtl. zu Fall kommen können.

Die Erfindung ist nicht auf die zuvor beschriebenen Ausführungsbeispiele beschränkt, vielmehr können weitere Ausführungsbeispiele durch weitere Kombinationen der zuvor beschriebenen Merkmale erhalten werden.

### BEZUGSZEICHENLISTE

- 1: erstes Schienenfahrzeug
- 2: zweites Schienenfahrzeug
- 3: wegseitige Einrichtung
- 4: Streckenabschnitt erstes Schienenfahrzeug
- 5: Streckenabschnitt zweites Schienenfahrzeug
- 6: Schienenfahrzeug
- 10: Datenverbindung erstes Schienenfahrzeug - wegseitige Einrichtung
- 12: Datenverbindung zweites Schienenfahrzeug - wegseitige Einrichtung
- 14: Datenverbindung erstes Schienenfahrzeug - zweites Schienenfahrzeug
- 20: Bereich mit normalem Bremsvermögen
- 22: Bereich mit vermindertem Bremsvermögen
- 24: Soll-Bremskurve nach Stand der Technik
- 26: Ist-Bremskurve nach Stand der Technik
- 28: situationsabhängige Ist-Bremskurve
- 30: situationsabhängige Ist-Bremskurve
- BA: Bremskurvenanpassung
- FP: Fahrzeugparameter erstes Schienenfahrzeug
- FP2: Fahrzeugparameter zweites Schienenfahrzeug
- HP: Haltepunkt
- PW: Parameterwechsel
- S: Weg
- S1: Erfassen von Messdaten
- S2: Ermittlung aktuelles Bremsvermögen
- S3: Versenden der Information
- S4: Empfang der Information
- S5: Plausibilisierung
- S6: Speicherung der Information in einer Datenbank
- S7: Definition von Fahrempfehlungen
- S8: Versenden der Information
- S9: Erhalt der Information
- S10: Auslösen von Aktionen
- V: Geschwindigkeit

## Patentansprüche

1. Verfahren zur Ermittlung eines positionsbezogenen Bremsvermögens eines Fahrzeugs, wobei
ein erstes Fahrzeug mindestens eine positionsbezogene Information einer Strecke ermittelt, wobei
die mindestens eine positionsbezogene Information der Strecke eine Information zu einem Bremsvermögen auf der Strecke ist, wobei
das erste Fahrzeug die mindestens eine positionsbezogene Information an einen Empfänger übermittelt, wobei
der Empfänger mindestens ein zweites Fahrzeug ist.

2. Verfahren gemäß Anspruch 1, wobei
das erste Fahrzeug mindestens eine weitere positionsbezogene Information von einem Sender empfängt.

3. Verfahren gemäß Anspruch 1 oder 2, wobei ein weiterer Empfänger
mindestens ein weiteres Fahrzeug, und/oder
mindestens eine wegseitige Einrichtung (3) ist.

4. Verfahren gemäß Anspruch 2 oder 3, wobei der Sender
mindestens ein weiteres Fahrzeug, und/oder
mindestens eine wegseitige Einrichtung (3) ist.

5. Verfahren gemäß mindestens einem der vorangegangenen Ansprüche, wobei
das erste Fahrzeug ein erstes Schienenfahrzeug (1), und
das mindestens zweite Fahrzeug ein zweites Schienenfahrzeug (2) ist.

6. Verfahren gemäß Anspruch 5, wobei
das erste Schienenfahrzeug (1) mindestens eine Information zum Bremsvermögen auf der Strecke während eines Verzögerungsvorgangs, und/oder
eines Beschleunigungsvorgangs, und/oder
bei einer anderen Fahrsituation ermittelt.

7. Verfahren gemäß Anspruch 6, wobei
die Information zum Bremsvermögen mindestens eine positionsbezogene Information eines Kraftschlusses zwischen mindestens einem Rad des ersten Schienenfahrzeugs (1) und der Schiene ist.

8. Verfahren gemäß einem der Ansprüche 5 bis 7, wobei
das erste Schienenfahrzeug (1) und/oder das zweite Schienenfahrzeug (2) mindestens eine positionsbezogene Information zur Einsatzmöglichkeit mindestens eines Bremssystems ermittelt.

9. Verfahren gemäß Anspruch 8, wobei
die mindestens eine positionsbezogene Information zur Einsatzmöglichkeit mindestens eines Bremssystems eine Temperatur der Schiene ist.

10. Verfahren gemäß mindestens einem der Ansprüche 5 bis 9, wobei
zur Ermittlung der mindestens einen positionsbezogenen Information zum Bremsvermögen auf einem aktuellen Streckenabschnitt der Einfluss durch das erste Schienenfahrzeug (1) selbst auf das Bremsvermögen mit berücksichtigt wird.

11. Verfahren gemäß mindestens einem der Ansprüche 5 bis 10, wobei
das erste Schienenfahrzeug (1) zur Ermittlung der mindestens einen positionsbezogenen Information zum Bremsvermögen auf dem aktuellen Streckenabschnitt die im ersten Schienenfahrzeug (1) vorhandenen
Sensoriken, und/oder
Vorrichtungen, und/oder
Verfahren nutzt.

12. Verfahren gemäß mindestens einem der Ansprüche 5 bis 11, wobei
das erste Schienenfahrzeug (1) zur Ermittlung der mindestens einen positionsbezogenen Information zum Bremsvermögen auf dem aktuellen Streckenabschnitt zusätzliche
Sensoriken, und/oder
Vorrichtungen, und/oder
Verfahren nutzt.

13. Verfahren gemäß mindestens einem der vorangegangenen Ansprüche, wobei mindestens eine weitere positionsbezogene Informationen eine Information
zur Umgebungstemperatur, und/oder
zur Wetterbedingung, und/oder
zur Feuchte der Strecke, und/oder
zur Schienentemperatur, und/oder
zur Änderungswahrscheinlichkeit der positionsbezogenen Informationen, und/oder zu Objekten an oder auf der Strecke, und/oder
zur Verschmutzung der Schiene ist, und/oder
mindestens eine weitere Information eine Information über den Zustand mindestens eines Bremssystems des zweiten Schienenfahrzeugs (2) ist.

14. Verfahren gemäß mindestens einem der vorangegangenen Ansprüche, wobei
aufgrund der mindestens einen ermittelten und/oder erhaltenen Information mindestens eine Aktion in mindestens
dem ersten Schienenfahrzeug (1), und/oder
dem zweiten Schienenfahrzeug (2), und/oder
einer wegseitigen Einrichtung (3) ausgelöst wird.

15. Verfahren gemäß Anspruch 14, wobei
die mindestens eine Aktion eine Entscheidung über die Auswahl mindestens eines Bremssystems des ersten Schienenfahrzeugs (1) oder zweiten Schienenfahrzeugs (2) für einen Streckenabschnitt ist.

16. Verfahren gemäß einem der Ansprüche 14 oder 15, wobei
die mindestens eine Aktion eine Bestimmung eines erforderlichen Abstands zwischen mindestens dem ersten Schienenfahrzeug (1) und dem zweiten Schienenfahrzeug (2) ist.

17. Verfahren gemäß einem der Ansprüche 14 bis 16, wobei
die mindestens eine Aktion eine Bestimmung einer situationsabhängigen Bremskurve für mindestens ein Schienenfahrzeug (1, 2) ist.

18. Verfahren gemäß einem der Ansprüche 14 bis 17, wobei
die mindestens eine Aktion eine Anforderung
mindestens einer Wartungsaktion, und/oder
mindestens einer Reinigungsaktion ist.

19. Computerprogrammprodukt mit auf einem maschinenlesbaren Träger gespeichertem Programmcode zur Durchführung des Verfahrens gemäß mindestens einem der Ansprüche 1 bis 18.

20. Steuervorrichtung zur Durchführung des Verfahrens gemäß mindestens einem der Ansprüche 1 bis 18, wobei
die Steuervorrichtung in mindestens einem Fahrzeug vorgesehen ist, wobei
die Steuervorrichtung Schnittstellen zum Auslösen mindestens einer Aktion in dem Fahrzeug aufweist.

21. Steuervorrichtung zur Durchführung des Verfahrens gemäß mindestens einem der Ansprüche 1 bis 18, wobei
die Steuervorrichtung in einer wegseitigen Einrichtung vorgesehen ist, wobei
die Steuervorrichtung Schnittstellen zum Auslösen mindestens einer Aktion in der wegseitigen Einrichtung aufweist.

22. Steuervorrichtung zur Durchführung des Verfahrens gemäß mindestens einem der Ansprüche 1 bis 18, wobei
die Steuervorrichtung mehrteilig ausgeführt ist, wobei
ein Teil in mindestens einem Fahrzeug vorgesehen ist, und/oder
ein weiterer Teil in mindestens einer wegseitigen Einrichtung vorgesehen ist, wobei
die Steuervorrichtung Schnittstellen zum Auslösen mindestens einer Aktion in dem mindestens einen Fahrzeug oder der mindestens einen wegseitigen Einrichtung aufweist.

23. Steuervorrichtung gemäß einem der Ansprüche 20 bis 22, wobei
die Steuervorrichtung mindestens eine Schnittstelle zu einem Anwender aufweist, wobei die Schnittstelle in Form
eines tragbaren Handgeräts und/oder
eines fest installieren Eingabegeräts in mindestens einem Fahrzeug oder einer wegseitigen Einrichtung vorgesehen ist.

## Claims

1. A method for ascertaining a position-related braking capability of a vehicle,
a first vehicle ascertaining at least one item of position-related information about a line,
the at least one item of position-related information about the line being information pertaining to a braking capability on the line,
the first vehicle transmitting the at least one item of position-related information to a receiver,
the receiver being at least one second vehicle.

2. A method according to claim 1,
the first vehicle receiving at least one further item of position-related information from a transmitter.

3. A method according to claim 1 or 2, a further receiver being
at least one further vehicle and/or
at least one wayside device (3).

4. A method according to claim 2 or 3, the transmitter being at least one further vehicle and/or
at least one wayside device (3).

5. A method according to at least one of the preceding claims,
the first vehicle being a first rail vehicle (1) and
the at least second vehicle being a second rail vehicle (2).

6. A method according to claim 5,
the first rail vehicle (1) ascertaining at least one item of information about the braking capability on the line during a deceleration process and/or
an acceleration process and/or
in another running situation.

7. A method according to claim 6,
the information about the braking capability being at least one item of position-related information about the adhesion between at least one wheel of the first rail vehicle (1) and the rail.

8. A method according to one of claims 5 to 7,
the first rail vehicle (1) and/or the second rail vehicle (2) ascertaining at least one item of position-related information about the possibility of using at least one braking system.

9. A method according to claim 8,
the at least one item of position-related information about the possibility of using at least one braking system being the temperature of the rail.

10. A method according to at least one of claims 5 to 9,
the influence of the first rail vehicle (1) itself on the braking capability also being taken into consideration in ascertaining the at least one item of position-related information about the braking capability on a present line section involves.

11. The method according to at least one of claims 5 to 10,
the first rail vehicle (1) using the
sensors and/or
devices and/or
methods
available in the first rail vehicle (1) to ascertain the at least one item of position-related information about the braking capability on a current section of line.

12. A method according to at least one of claims 5 to 11,
the first rail vehicle (1) using additional
sensors and/or
devices and/or
methods
to ascertain the at least one item of position-related information about the braking capability on the current section of line.

13. A method according to at least one of the preceding claims,
at least one further item of position-related information being information
about the ambient temperature and/or
about the weather conditions and/or
about the dampness of the line and/or
about the rail temperature and/or
about the likelihood of a change in the position-related information and/or
about objects along or on the line and/or
about dirt on the rail, and/or
at least one further item of information being information about the state of at least one braking system of the second rail vehicle (2).

14. A method according to at least one of the preceding claims,
at least one action being triggered in at least
the first rail vehicle (1) and/or
the second rail vehicle (2) and/or
a wayside device (3)
on the basis of at least one ascertained and/or obtained item of information.

15. The method according to claim 14,
the at least one action being a decision about the selection of at least one braking system of the first rail vehicle (1) or the second rail vehicle (2) for a section of line.

16. A method according to either of claims 14 and 15,
the at least one action being the determination of a necessary distance between at least the first rail vehicle (1) and the second rail vehicle (2).

17. A method according to any one of claims 14 to 16,
the at least one being the determination of a situation-dependent braking curve for at least one rail vehicle (1, 2).

18. A method according to any one of claims 14 to 17,
the at least one action being a request
for at least one maintenance action and/or
for at least one cleaning action.

19. A computer program product, having program code stored on a machine-readable carrier, for performing the method according to at least one of claims 1 to 18.

20. A control device for performing a method according to at least one of claims 1 to 18,
the control device being provided in at least one vehicle,
the control device having interfaces for triggering at least one action in the vehicle.

21. A control device for performing a method according to at least one of claims 1 to 18,
the control device being provided in a wayside device,
the control device having interfaces for triggering at least one action in the wayside device.

22. A control device for performing a method according to at least one of claims 1 to 18,
the control device being designed with a plurality of parts,
one part being provided in at least one vehicle, and/or
a further part being provided in at least one wayside device,
the control device having interfaces for triggering at least one action in the at least one vehicle or the at least one wayside device.

23. A control device according to any one of claims 20 to 22,
the control device having at least one interface to a user, the interface being provided in the form of
a portable handheld device and/or
a permanently installed input device in at least one vehicle or a wayside device.

## Revendications

1. Procédé de détermination d'un pouvoir de freinage , rapporté à la position , d'un véhicule , dans lequel un premier véhicule détermine au moins une information , rapportée à la position , d'un itinéraire , dans lequel
la au moins une information rapportée à la position de l 'itinéraire est une information sur un pouvoir de freinage sur l'itinéraire , dans lequel le premier véhicule transmet la au moins une information , rapportée à la position , à un récepteur , dans lequel
le récepteur est au moins un deuxième véhicule .

2. Procédé suivant la revendication 1 , dans lequel
le premier véhicule reçoit au moins une autre information , rapportée à la position , d'un émetteur .

3. Procédé suivant la revendication 1 ou 2 , dans lequel un autre récepteur
est au moins un autre véhicule et/ou
au moins un dispositif (3) du côté de l'infrastructure.

4. Procédé suivant la revendication 2 ou 3 , dans lequel l 'émetteur
est au moins un autre véhicule et/ou
au moins un dispositif (3) du côté de l'infrastructure.

5. Procédé suivant au moins l'une des revendications précédentes , dans lequel
le premier véhicule est un premier véhicule (1) ferroviaire et le au moins un deuxième véhicule est un deuxième véhicule (2) ferroviaire .

6. Procédé suivant la revendication 5 , dans lequel
le premier véhicule (1) ferroviaire détermine au moins une information sur le pouvoir de freinage sur l'itinéraire pendant une décélération et/ou une accélération et/ou dans une autre situation de marche .

7. Procédé suivant la revendication 6 , dans lequel
l'information sur le pouvoir de freinage est au moins une information , rapportée à la position , d'une coopération de force entre au moins une roue du premier véhicule (1) ferroviaire et le rail .

8. Procédé suivant l'une des revendications 5 à 7 , dans lequel
le premier véhicule (1) ferroviaire et/ou le deuxième véhicule (2) ferroviaire détermine au moins une information , rapporté à la position , sur la possibilité d'utiliser au moins un système de frein .

9. Procédé suivant la revendication 8 , dans lequel
la au moins une information , rapportée à la position , sur la possibilité d'utiliser au moins un système de frein est une température du rail .

10. Procédé suivant au moins l'une des revendications 5 à 9 , dans lequel ,
pour la détermination de la au moins une information , rapportée à la position , sur la possibilité de freinage sur une section d'itinéraire en cours , on prend en compte l 'influence du premier véhicule (1) ferroviaire soi-même sur le pouvoir de freinage .

11. Procédé suivant au moins l'une des revendications 5 à 10 , dans lequel
le premier véhicule (1) ferroviaire utilise , pour la détermination de la au moins une information , rapportée à la position , sur le pouvoir de freinage sur la section d 'itinéraire en cours , des
capteurs et/ou
systèmes et/ou
procédés
présents dans le premier véhicule (1) ferroviaire .

12. Procédé suivant au moins l'une des revendications 5 à 11 , dans lequel
le premier véhicule (1) ferroviaire utilise , pour la détermination de la au moins une information , rapportée à la position , sur le pouvoir de freinage sur la section d 'itinéraire en cours , des
capteurs et/ou
systèmes et/ou
procédés
supplémentaires .

13. Procédé suivant au moins l'une des revendications précédentes , dans lequel
au moins une autre information , rapportée à la position , est une information
sur la température ambiante et/ou
sur les conditions atmosphériques et/ou
sur l'humidité de l'itinéraire et/ou
sur la température du rail et/ou
sur la probabilité de modification des informations rapportées à la position et/ou
sur des objets dans ou sur l'itinéraire et/ou sur l'encrassement du rail et/ou
au moins une autre information est une information sur l'état d'au moins un système de frein du deuxième véhicule (2) ferroviaire .

14. Procédé suivant au moins l'une des revendications précédentes , dans lequel
sur la base de la au moins une information déterminée et/ou obtenue , on déclenche au moins une action dans au moins
le premier véhicule (1) ferroviaire et/ou
le deuxième véhicule (2) ferroviaire et/ou
un dispositif (3) du côté de l'infrastructure.

15. Procédé suivant la revendication 14 , dans lequel la au moins une action est une décision sur le choix d'au moins un système de frein du premier véhicule (1) ferroviaire ou du deuxième véhicule (2) ferroviaire pour une section de l 'itinéraire.

16. Procédé suivant l'une des revendications 14 ou 15 , dans lequel
la au moins une action est une détermination d'une distance nécessaire entre au moins le premier véhicule (1) ferroviaire et le deuxième véhicule (2) ferroviaire .

17. Procédé suivant l'une des revendications 14 à 16 , dans lequel
la au moins une action est une détermination d'une courbe de freinage en fonction de la situation pour au moins un véhicule (1 , 2) ferroviaire .

18. Procédé suivant l'une des revendications 14 à 17 , dans lequel
la au moins une action est une demande
d'au moins une action d'entretien et/ou d'au moins une action de nettoyage .

19. Produit de programme d'ordinateur, ayant un code de programme mis en mémoire sur un support déchiffrable par ordinateur , pour effectuer le procédé suivant au moins l'une des revendications 1 à 18 .

20. Système de commande pour effectuer le procédé suivant au moins l'une des revendications 1 à 18 , dans lequel
le système de commande est prévu dans au moins un véhicule , dans lequel
le système de commande a des interfaces pour le déclenchement d'au moins une action dans le véhicule .

21. Système de commande pour effectuer le procédé suivant au moins l'une des revendications 1 à 18 , dans lequel
le système de commande est prévu dans un dispositif du côté de l'infrastructure, dans lequel
le système de commande a des interfaces pour le déclenchement d'au moins une action dans le dispositif du côté de l 'infrastructure.

22. Système de commande pour effectuer le procédé suivant au moins l'une des revendications 1 à 18 , dans lequel
le système de commande est réalisé en plusieurs parties , dans lequel
une partie est prévue dans au moins un véhicule et/ou
une autre partie est prévue dans au moins un dispositif du côté de l'infrastructure, dans lequel
le dispositif de commande a des interfaces pour le déclenchement d'au moins une action dans le au moins un véhicule ou le au moins un dispositif du côté de l 'infrastructure.

23. Système de commande pour effectuer le procédé suivant au moins l'une des revendications 20 à 22 , dans lequel
le système de commande a au moins une interface avec un utilisateur , dans lequel l'interface est prévue sous la forme
d'un appareil manuel portable et/ou un appareil d'entrée monté fixe dans au moins un véhicule ou dans un dispositif du côté de l'infrastructure .
